# EUROPÄISCHE PATENTSCHRIFT

(11) **EP 0 639 134 B1**
(45) Veröffentlichungstag und Bekanntmachung des Hinweises auf die Patenterteilung: **17.07.1996**
(21) Anmeldenummer: 93909857.0
(22) Anmeldetag: 29.04.1993
(51) Int. Cl.: B64D 9/00, B65D 88/14

(54) **VERRIEGELUNGSVORRICHTUNG**
LOCKING DEVICE
DISPOSITIF DE VERROUILLAGE

(30) Priorität: 07.05.1992 DE 4215020
(43) Veröffentlichungstag der Anmeldung: 22.02.1995
(73) Patentinhaber: ZEPPELIN- SYSTEMTECHNIK GmbH, D-77656 Offenburg (DE)
(72) Erfinder: HIMMELREICH, Peter, D-7608 Willstätt-Eckartsweier (DE)
(74) Vertreter: Grünecker, Kinkeldey, Stockmair & Schwanhäusser Anwaltssozietät
(86) Internationale Anmeldenummer: EP9301032
(87) Internationale Veröffentlichungsnummer: WO9322197

(56) Entgegenhaltungen:
- FR-A- 1 563 025
- FR-A- 2 487 777
- GB-A- 1 257 862
- US-A- 3 602 474
- US-A- 4 795 047

## Beschreibung

Die Erfindung bezieht sich auf eine Verriegelungsvorrichtung für ein Behältnis, wie Container, Shelter oder dergleichen, mit den Merkmalen des Oberbegriffs des Patentanspruchs 1.

Bei einem aus der FR-A-2487777 bekannten Gegenstand dieser Art weist die Verlastungsschiene zwei tunnelförmige Hohlkörper auf, die über die Länge der Verlastungsschiene parallel zueinander verlaufen und durch eine senkrechte Wand voneinander getrennt sind. Eine Seitenwand des dem Behältnis zugewandten Hohlkörpers ist parallel zur Außenwand des Behältnisses zur Bildung des Anlageflansches verlängert und weist im Bereich des Anlageflansches in regelmäßigen Abständen zueinander angeordnete Löcher auf, über die die Verlastungsschiene an dem Behältnis verbolzt ist. Auf der dem Behältnis zugewandten Seite des Anlageflansches weist die Verlastungsschiene Lastbuchsen auf, die auf am Behältnis vorgesehenen Verladevorsprünge aufgesteckt sind. Die auf die Verriegelungsvorrichtung einwirkenden Kräfte werden zum einen Teil über die Bolzenverbindung und zum anderen Teil über die Steckverbindung der Buchse zwischen Behältnis und Verlastungsschiene übertragen.

Nachteiligerweise sind die Lastbuchsen nur im Bereich der weit voneinander beabstandet angeordneten Verladevorsprünge vorgesehen, so daß die Verlastungsschiene über weite Bereiche nur über die Bolzenverbindung durch die Löcher des Anlageflansches mit dem Behältnis verbunden ist. Durch die beim Verladen oder Transport in beträchtlicher Höhe auf diese Verbindung einwirkenden Kräfte kann diese Verbindung versagen und das Behältnis ist nicht mehr wirksam auf der Ladefläche befestigt.

Der Erfindung liegt die Aufgabe zugrunde, eine Verriegelungsvorrichtung der oben genannten Gattung zu schaffen, mit der das Behältnis bei Transportbedingungen wirksam auf der Ladefläche befestigbar ist.

Diese Aufgabe wird erfindungsgemäß durch die im kennzeichnenden Teil des Patentanspruchs 1 genannten Merkmale gelöst.

Dadurch kann die Verlastungsschiene im Bereich des Hohlprofils wirksam an dem Behältnis befestigt werden. Die lösbare Verbindung zwischen Behältnis und Verlastungsschiene über den Anlageflansch wird über die zusätzlichen Mittel, beispielsweise durch Schrauben, wirksam unterstützt. Die beabstandete Anordnung der Verbindung des Anlageflansches und der Verbindung über den Aufnahmezylinder erlaubt sehr hohe Kräfte und Momente zwischen Behältnis und Verlastungsschiene zu übertragen. Vorteilhafterweise ist dadurch auch die von dem Hohlprofil an der Behältniswand abgedeckte Fläche zum Übertragen von Kräften nutzbar. Dies beugt gegenüber dem Stand der Technik insbesondere vor dem Abbiegen der Verlastungsschiene von dem Behältnis um den Anlageflansch herum vor.

Als Mittel zum lösbaren Befestigen sind beispielsweise Schrauben geeignet. Über sie kann die Verlastungsschiene einfach an- und abmontiert werden. Dies ist insbesondere günstig, wenn zum Weitertransport des Behältnisses die Verlastungsschiene stört und von dem Behältnis entfernt werden muß.

Darüberhinaus kann die erfindungsgemäße Verlastungsschiene an jedem beliebigen Behältnis mit ebenen Seitenwänden angebracht werden. Das Befestigen ist unabhängig von den an Containern unterschiedlich ausgebildeten Verladevorsprüngen.

Die Anordnung des Aufnahmezylinders im wesentlichen senkrecht zu den Seitenwänden des Hohlprofils ermöglicht das Aufbringen von Kräften senkrecht zu den Seitenwänden des Hohlprofils und dem Behältnis, so daß über das Pressen der beiden Flächen gegeneinander hohe Reibungskräfte, die das Verschieben von Verlastungsschiene und Behältnis gegeneinander verhindern, erzeugbar sind. Die zum Seitenprofil offene Ausbildung des Aufnahmezylinders bewirkt die einfache Zugänglichkeit der Mittel zum lösbaren Befestigen der Verriegelungsvorrichtung.

Dabei ist es weiterhin von Vorteil, wenn der Aufnahmezylinder Zwei Abschnitte mit unterschiedlichem Innendurchmesser aufweist, wobei der Abschnitt mit größerem Innendurchmesser als Versenköffnung und der Abschnitt mit kleinerem Innendurchmesser mit einem Schraubenanschlag ausgebildet ist. Auf diese Weise steht die eingeschraubte Schraube nicht über die Verlastungsschiene hervor, sondern ist vollständig in der Versenköffnung des Aufnahmezylinders eingeführt. Da die Schraube innerhalb des Aufnahmezylinders beim Einschrauben mit dem Schraubenanschlag in Anlage gerät, ist der Anlagepunkt gegenüber der Innenwand in Richtung zum Seitenprofil verlagert. Dadurch ist sowohl das Einschrauben der Schraube erleichtert, als auch eine höhere Belastbarkeit des Hohlprofils in vertikaler Richtung gegeben.

Der Aufnahmezylinder ist zwischen zwei gegenüberliegenden Öffnungen der Seitenwände im Hohlprofil in einfacher Weise anordbar. Weist die Öffnung in der Außenwand eine dem Außendurchmesser des Aufnahmezylinders entsprechenden Durchmesser auf, so ist dieser auch nachträglich einsetzbar. Eine Befestigung im Hohlprofil kann beispielsweise durch Verkleben erfolgen.

Zur lösbaren Befestigung der Verlastungsschiene am Verhältnis sind beispielsweise Schrauben verwendbar. Dabei wird die Verlastungsschiene direkt an die Wände des Behältnisses an derem unterem Ende angeschraubt.

In diesem Zusammenhang ist es weiterhin günstig, wenn der Anlageflansch mit einem Vergleich zum Hohlprofil größeren Wandstärke ausgebildet ist.

Zur weiteren Befestigung und Positionierung des Hohlprofils an beziehungsweise gegenüber dem Behältnis ist von Vorteil, wenn im Anlageflansch eine Anzahl von Bohrungen zur Aufnahme von Positionierbolzen und/oder Fixierschrauben ausgebildet sind. Auf diese Weise ist das Hohlprofil durch weitere Schrauben im Bereich des Anlageflansch anschraubbar. Ein Anlegen und Ausrichten des Hohlprofils gegenüber dem Behältnis ist durch die Positionierbolzen und entsprechende Positionieröffnungen des Behältnisses erleichtert.

Um die Positionierbolzen in ihrer Richtung relativ zu den Bohrungen besser zu fixieren, ist es von Vorteil, wenn ein Positionierbolzen in einer in die Bohrung eingesteckten Führungsbuchse geführt ist. Diese ist beispielsweise aus einem härteren Material als das Hohlprofil gebildet, damit auf den Positionierbolzen bei der Montage beziehungsweise Demontage der Verlastungsschiene einwirkende Kräfte nicht zu einer Vergrößerung der Bohrung führen.

Um die Positionierbolzen in einfacher Weise im Anlageflansch zu halten, erweist es sich als Vorteil, wenn Positionierbolzen und Führungbuchse in der Bohrung durch einen mit dem Anlageflansch verschraubten Haltebügel gehalten sind.

Um in analoger Weise die auf die Fixierschrauben einwirkenden Kräfte besser aufzunehmen, ist bei einer Ausführungsform der Erfindung zwischen der Bohrung und der Fixierschraube eine Anlageleiste angeordnet. Diese kann entsprechend zur Führungsbuchse aus einem härteren Material hergestellt sein.

Entsprechend zum Haltebügel kann auch die Anlageleiste am Anlageflansch anschraubbar sein. Zur Vereinfachung der Herstellung des Hohlprofils ist es in diesem Zusammenhang günstig, wenn Anlageleiste und Haltebügel mit gleichen Abmessungen hergestellt sind und entsprechend in gleicher Weise mit dem Anlageflansch verschraubt werden.

Bei einer vorteilhaften Ausführungsform der Erfindung ist die Verlastungsschiene aus einem Hohlprofil gebildet, welches mit einer Innenwand am Behältnis anliegt und von dessen gegenüberliegender Außenwand das Seitenprofil absteht. Auf diese Weise ist die Innenwand einfach an das Behältnis anzulegen und an diesem zu befestigen. Entsprechend ist an der Außenwand das Seitenprofil zur Verriegelung angeordnet. Durch die Verwendung eines Hohlprofils ergibt sich eine für Luftfracht wichtige Gewichtsersparnis bei ausreichender Stabilität der Verlastungsschiene.

In diesem Zusammenhang ist es weiterhin von Vorteil, wenn Hohlprofil und Seitenprofil einstückig ausgebildet sind. Auf diese Weise ist die gesamte Verriegelungsvorrichtung in einem Arbeitsgang am Behältnis befestigbar. Eine separate Befestigung des Seitenprofils an der Verlastungsschiene entfällt. Dies ist insbesondere von Vorteil, wenn die mit dem Seitenprofil zusammenwirkenden Befestigungseinrichtungen in jedem Fluggerät gleich sind.

Um bei möglichst geringem Materialaufwand eine hohe Festigkeit des Hohlprofils zu erzielen, erweist es sich als günstig, wenn das Hohlprofil einen trapezförmigen Querschnitt aufweist, wobei Innen- und Außenwand im wesentlichen parallel sind, eine Bodenwand parallel zur Aufstandsfläche des Behältnisses ist und eine Deckwand in Richtung zum Seitenprofil nach unten geneigt verläuft. Dabei ist das Behältnis in einfacher Weise auf seine Aufstandsfläche und gegebenenfalls auf der Bodenwand des Hohlprofils auf Rollenbahnen oder auf einer entsprechenden Gleitfläche im Laderaum des Fluggeräts bewegbar. Durch die geneigt verlaufende Deckwand des Hohlprofils werden insbesondere die während des Transports auftretenden Querkräfte aufgenommen und abgeleitet. Auch in Längsrichtung des Hohlprofils ergibt sich durch deren spezielle Querschnittsform eine erhöhte Stabilität. Als Material für das Hohlprofil ist ein entsprechendes Leichtmetall verwendbar, wobei insbesondere Aluminiumlegierungen, die eine entsprechende Härte und Steifigkeit aufweisen, bevorzugt werden.

Bei einer einfachen Ausführungsform des Seitenprofils steht dieses zahnartig vom Hohlprofil ab und weist zum Eingreifen von einer auf der Ladefläche im Fluggerät angeordneten Verriegelungseinrichtung Zahnlücken auf. In die Zahnlücken sind auf der Ladefläche verschwenkbar gelagerte, sogenannte Locks einfach einschwenkbar. Weiterhin kann auch das zahnartig abstehende Seitenprofil von einer entsprechenden Verriegelungseinrichtung in Richtung der Ladefläche gedrückt und auf diese Weise das Behältnis fixiert werden.

Zur Verstärkung des Behältnisses insbesondere im Bereich der Verlastungsschiene, ist von Vorteil, wenn zwischen Innenwand des Hohlprofils und Behältnis ein Winkelprofil angeordnet ist, wobei ein Zwischenschenkel des Winkelprofils parallel zur Innenwand verläuft und ein Aufstandsschenkel von unten an der Aufstandsfläche des Behältnis anliegt. So führen die von der Verlastungsschiene auf das Behältnis übertragenen Kräfte in weit geringerem Maße zu einer Beschädigung des Behältnis. Die Kräfte werden über das Winkelprofil besser entlang der Kanten zwischen Seitenwand und Aufstandsfläche des Behältnis aufgeteilt.

Günstig ist dabei, wenn für die Schrauben und/oder Fixierschrauben und/oder Positionierbolzen Aufnahmebohrungen im Zwischenschenkel und einer Behälterwand angeordnet sind. In diesen sind entsprechende Einschraubhülsen oder Positionierhülsen befestigbar. Die Einschraubhülsen dienen zum Einschrauben der Schrauben beziehungsweise Fixierschrauben und die Positionierhülsen zum Einsetzen der Positionierbolzen. Durch die Anordnung dieser Hülsen, die wiederum aus härterem Material gebildet sein können, ist eine verbesserte Befestigung von Winkelprofil und Verlastungsschiene am Behältnis gegeben.

Weiterhin ist günstig, wenn zumindest in einigen Positionierhülsen Gleitbuchsen angeordnet sind. Bei Verwendung von mehreren Positionierbolzen sind auf diese Weise einige Positionierbolzen mit Spiel in den Positionierhülsen einsteckbar, während die feinere Ausrichtung von Verlastungsschiene, Winkelprofil und Behältnis durch die in den Gleitbuchsen exakter geführten Positionierbolzen erfolgt.

Um bei einer Ausführungsform der Erfindung das Einschieben beziehungsweise Ausschieben des Behältnisses und der seitlich angeordneten Verlastungsschienen zwischen die Befestigungsvorrichtungen im Fluggerät zu vereinfachen, ist zumindest an einem Ende der Verlastungsschiene eine Abstandsrolle um eine vertikale Drehachse drehbar gelagert. Diese verhindert ein Verkanten der Verlastungsschienen mit Führungen oder Befestigungseinrichtungen in oder auf der Ladefläche des Fluggeräts.

Weitere Vorteile ergeben sich dadurch, daß der Aufstandsschenkel mit größerer Wandstärke als die Bodenwand des Hohlprofils ausgebildet ist und wenn die Bodenwand relativ zur Aufstandsfläche gegenüber dem Aufstandsschenkel nach oben versetzt ist. Durch die Dicke des Aufstandsschenkels wird die Aufstandsfläche des Behältnisses in ausreichendem Abstand zur Ladefläche gehalten und auf diese Weise geschützt. Die Bodenwand des Hohlprofils kann eine geringere Dicke aufweisen, da, insbesondere bei gegenüber dem Aufstandsschenkel nach oben versetzter Bodenwand, deren Belastung geringer ist.

Bei Behältnissen, die insbesondere in ihren unteren Ecken Verladeecken, sogenannten ISO-Ecken aufweisen, ist die Aufstandsfläche des Behältnisses nicht eben. Daher ist es von Vorteil, wenn sich das Winkelprofil zwischen den Verladeecken erstreckt und mit diesen fluchtend ausgebildet ist. Auf diese Weise ergibt sich entlang von Verladeecken und Winkelprofil eine ebene Gleitfläche, die ein Verschieben des Behältnisses erleichtert.

Um die Stabilität der Verlastungsschiene zu erhöhen ist es weiterhin günstig, wenn die am Behältnis anliegende Innenwand des Hohlprofils einen über die Deckwand überstehenden Anlageflansch aufweist.

Die erfindungsgemäß vorgeschlagenen Lösungen und vorteilhafte Ausführungsbeispiele davon werden im folgenden anhand der in der Zeichnung dargestellten Figuren weiter erläutert und beschrieben.

Es zeigen:
- Fig.1: eine Seitenansicht eines Fluggeräts;
- Fig.2: einen Schnitt entlang der Linie II-II aus Figur 1;
- Fig.3: eine vergrößerte Darstellung der Einzelheit X aus Figur 2;
- Fig.4: eine Seitenansicht eines Behältnis mit einer Verriegelungsvorrichtung;
- Fig.5: eine Draufsicht auf ein Behältnis mit an dessen Längsseiten angeordneten Verriegelungsvorrichtungen;
- Fig.6: einen Schnitt entlang der Linie VI-VI aus Figur 5, und
- Fig.7: einen Schnitt entlang der Linie VII-VII aus Figur 5.

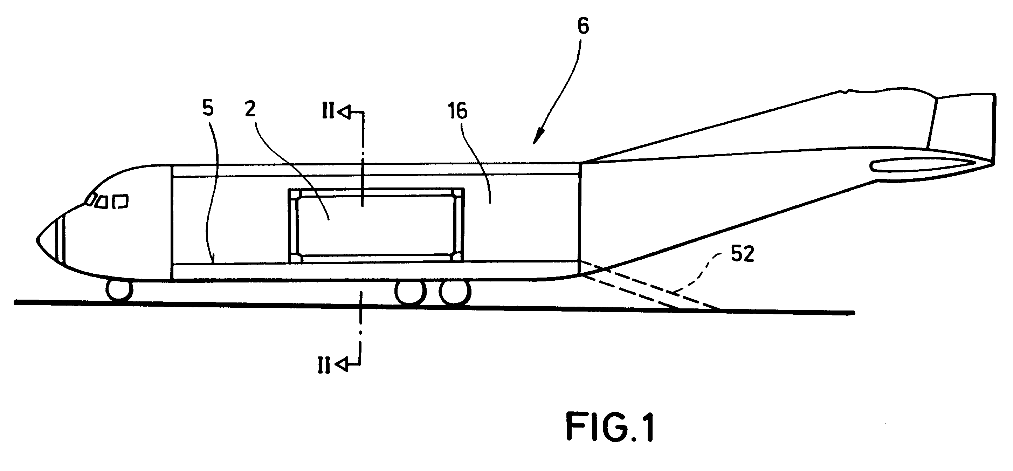

In Figur 1 ist als Fluggerät 6 ein Transportflugzeug dargestellt. Dieses weist einen Laderaum 16, auf in dem über eine verschwenkbar gelagerte Ladeklappe 52 ein Behältnis zuführbar ist. Das Behältnis 2, wie beispielsweise ein Container, Shelter oder dergleichen, steht auf einer Ladefläche 5 des Laderaums 16, wo es zum Transport fixiert wird.

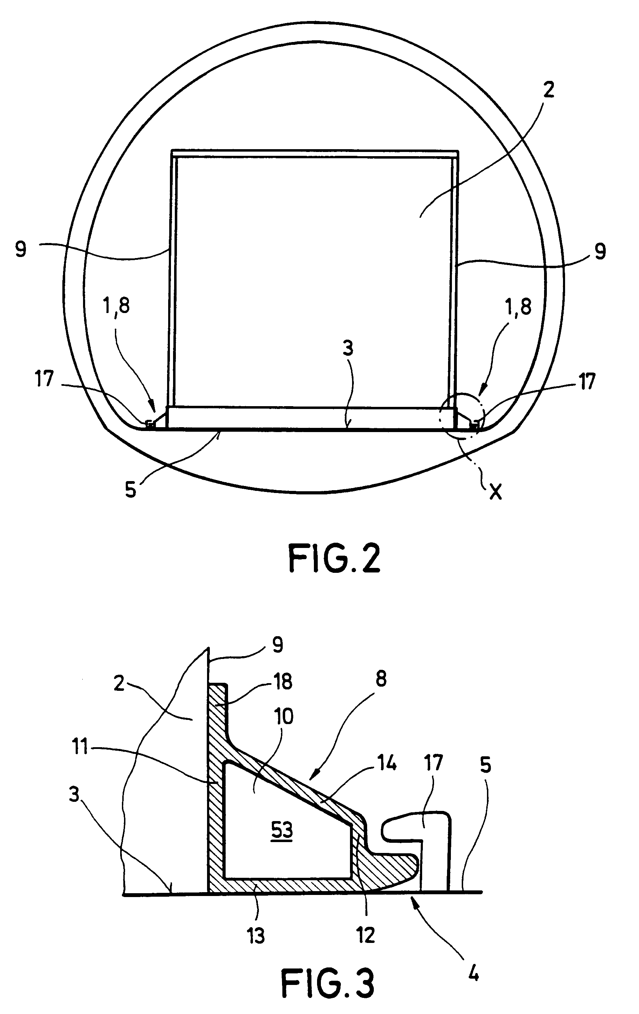

In Figur 2 ist ein Schnitt entlang der Linie II-II aus Figur 1 dargestellt. Das Behältnis 2 ist mit seiner Aufstandsfläche 3 auf der Ladefläche 5 im wesentlichen mittig zum Flugzeugrumpf angeordnet. Längsseiten 9 des Behältnis 2 sind in Längsrichtung des Flugzeugs ausgerichtet und an ihrer Unterseite mittels einer Verriegelungsvorrichtung 1 und einer auf der Ladefläche 5 angeordneten Befestigungseinrichtung 17 fixiert. Die Verriegelungsrichtung 1 ist als am unteren Ende der Längsseite 9 verlaufende Verlastungsschiene 8 beidseitig zum Behältnis 2 angeordnet.

In Figur 3 ist die erfindungsgemäße Verriegelungsvorrichtung aus Figur 2 vergrößert dargestellt.

Das Behältnis 2 steht direkt mit seiner Aufstandsfläche 3 auf der Ladefläche 5 auf. Am unteren Ende der Längsseite 9 ist die Verlastungsschiene 8 angeordnet. Diese ist als Hohlprofil mit einem im Querschnitt im wesentlichen trapezförmigen Hohlraum 53 ausgebildet. Dieser wird durch Seitenwände 11 und 12, Deckwand 14 und Bodenwand 13 begrenzt. Die Seitenwand 11 liegt als Innenwand an der Längsseite 9 des Behältnis 2 an. Parallel zur Innenwand 11 ist die als Außenwand ausgebildete Seitenwand 12 angeordnet. Von dieser steht ein Seitenprofil 4 ab. Die Höhe des Seitenprofils entspricht direkt benachbart zur Außenwand 12 in etwa deren halber Höhe. Die Unterseite des Seitenprofils verläuft relativ zur Ladefläche 5 nach oben geneigt, während ihre Oberseite im wesentlichen parallel zur Ladefläche 5 verläuft.

Zur Befestigung und zum Verriegeln der Verlastungsschiene 8 ist die Befestigungseinrichtung 17 höhenverstellbar relativ zur Ladefläche 5 gelagert. Beim Absenken der Befestigungseinrichtung gerät diese in Anlage mit der Oberseite des Seitenprofils 4, so daß das Hohlprofil 10 mit seiner Bodenwand 13 und entsprechend das Behältnis 2 mit seiner Aufstandsfläche 3 auf die Ladefläche 5 aufdrückbar sind.

Die Bodenwand 13 ist parallel zur Ladefläche 5 angeordnet. Die Deckwand 14 verläuft zwischen Innenwand 11 und Außenwand 12 und in Richtung zum Seitenprofil 4 nach unten geneigt. Am Schnittpunkt von Innenwand 11 und Deckwand 14 steht vom Hohlprofil 10 ein an der Längsseite 9 anliegender Anlageflansch 18 ab. Dieser verläuft in Verlängerung zur Innenwand 11.

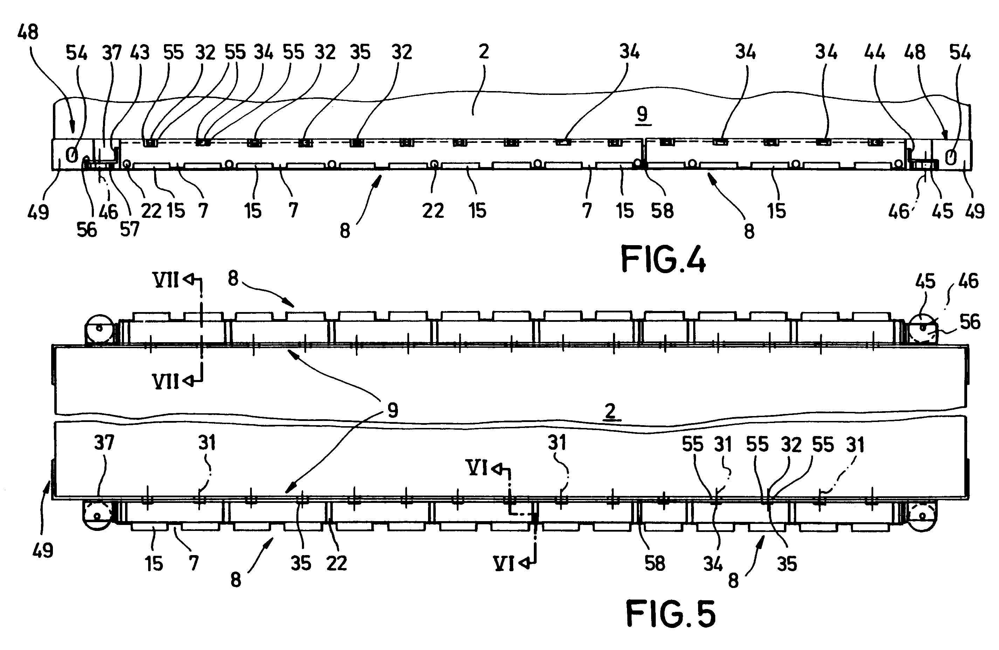

In Figur 4 ist eine Seitenansicht eines weiteren Behältnis 2 mit zwei unterschiedlich langen Verlastungsschienen 8 dargestellt. Diese erstrecken sich im wesentlichen zwischen zwei gegenüberliegenden Ecken 48 der Längsseite 9. In diesen Ecken sind am Behältnis 2 Verladungsecken 49 angeordnet, die von den Wänden des Behältnis 2 abstehen und eine im wesentlichen ellipsenförmige Öffnung 54 aufweisen.

Zwischen Verladungsecken 49 und Verlastungsschienen 8 ist jeweils eine Abstandsrolle 45 angeordnet. Diese ist zwischen zwei vom Ende 43 beziehungsweise 44 der Verlastungsschiene 8 abstehenden Lagerplatten 56 und 57 drehbar gelagert. Die untere Lagerplatte 57 erstreckt sich im wesentlichen parallel zur Aufstandsfläche des Behältnis 2. Die obere Lagerplatte 56 ist mit Abstand zur unteren Lagerplatte 57 angeordnet, wobei zwischen diesen die Abstandsrolle 45 um Drehachse 46 verdrehbar gelagert ist.

Die an den Enden 43 beziehungsweise 44 der Verlastungsschiene 8 angeordneten Lagerplatten beziehungsweise Abstandsrollen sind analog zueinander ausgebildet.

Die längere Verlastungsschiene 8 erstreckt sich in etwa über zwei Drittel der Längsseite 9, während die an der Stoßkante 58 anschließende, kürzere Verlastungsschiene 8 sich über in etwa ein Drittel der Länge der Längsseite 9 erstreckt. Die Verlastungsschienen 8 sind auch in anderen Längenverhältnissen ausbildbar.

Am unteren Ende der Verlastungsschiene 8 ist das Seitenprofil aus Figur 3 angeordnet. Es umfaßt eine Vielzahl von Zähnen 15, die aus der Zeichnungsebene hinausragen. Zwischen jeweils zwei benachbarten Zähnen 15 ist ein als Zahnlücke 7 ausgebildeter Verriegelungseingriff angeordnet. Von den Zähnen 15 beziehungsweise Zahnlücken 7 sind nur einige in Figur 4 gekennzeichnet.

In allen zweiten Zahnlücken 7 ist bei jeder Verlastungsschiene 8 ein Aufnahmezylinder 22 angeordnet.

Am oberen Ende der Verlastungsschienen 8 sind jeweils Haltebügel 34 beziehungsweise Anlageleisten 35 angeordnet. Die in Zeichnung 4 vorhandenen Haltebügel 34 sind alle gekennzeichnet, während von den Anlageleisten 35 nur einige gekennzeichnet sind. In jede Anlageleiste 35 ist zentral eine Fixierschraube 32 eingeschraubt. Seitlich zu dieser sind an beiden Enden der Anlageleiste Schrauben 55 zur Befestigung der Anlageleiste an der Verlastungsschiene 8 eingeschraubt.

Der Haltebügel 34 weist eine zur Anlageleiste 35 im wesentlichen gleiche Länge auf, wobei analog zur Anlageleiste 35 Schrauben 55 an beiden Enden des Haltebügels 34 in die Verlastungsschiene 8 eingeschraubt sind.

Beide Verlastungsschienen 8 weisen jeweils zwei Haltebügel 34 und acht beziehungsweise drei Anlageleisten 35 auf. Die Anzahl sowohl der Haltebügel als auch Anlageleisten, wie auch deren Anordnung relativ zu den Zähnen 15, ist veränderbar. In dem Bereich zwischen Verladungsecken 49 und den Enden 43 und 44 der Verlastungsschienen 8 ist ein Zwischenschenkel 37 eines Winkelprofils sichtbar, der an der Längsseite 9 des Behältnis 2 anliegt.

In Figur 5 ist eine Draufsicht auf ein Behältnis 2 mit seitlich angeordneten Verlastungsschienen 8 dargestellt. Gleiche Bezugszeichen entsprechen gleichen Teilen und werden nur noch teilweise erwähnt.

An beiden Längsseiten 9 des Behältnis 2 erstrecken sich die Verlastungsschienen 8 im wesentlichen von einem Ende des Behältnis zum anderen. An beiden Enden der Verlastungsschienen 8 sind Abstandsrollen 45 um Drehachsen 46 drehbar gelagert. Die Aufnahmezylinder 22 erstrecken sich jeweils von Zahnlücken 7 bis in etwa zu den Längsseiten 9 des Behältnis 2. Zwischen zwei benachbarten Aufnahmezylindern 22 sind jeweils zwei Anlageleisten 35 beziehungsweise eine Anlageleiste 35 und ein Haltebügel 34 angeordnet. Die Haltebügel 34 decken jeweils einen Positionierbolzen 31 ab und sind durch zwei auf beiden Seiten von diesem angeordnete Schrauben 55 an der Verlastungsschiene 8 befestigt. Jede Anlageleiste 35 wird von einer Fixierschraube 32 durchsetzt und von zwei Schrauben 55 an der Verlastungsschiene 8 gehalten. Alle Haltebügel 34 beziehungsweise Anlageleisten 35 sind mit im wesentlichen gleicher Länge ausgebildet.

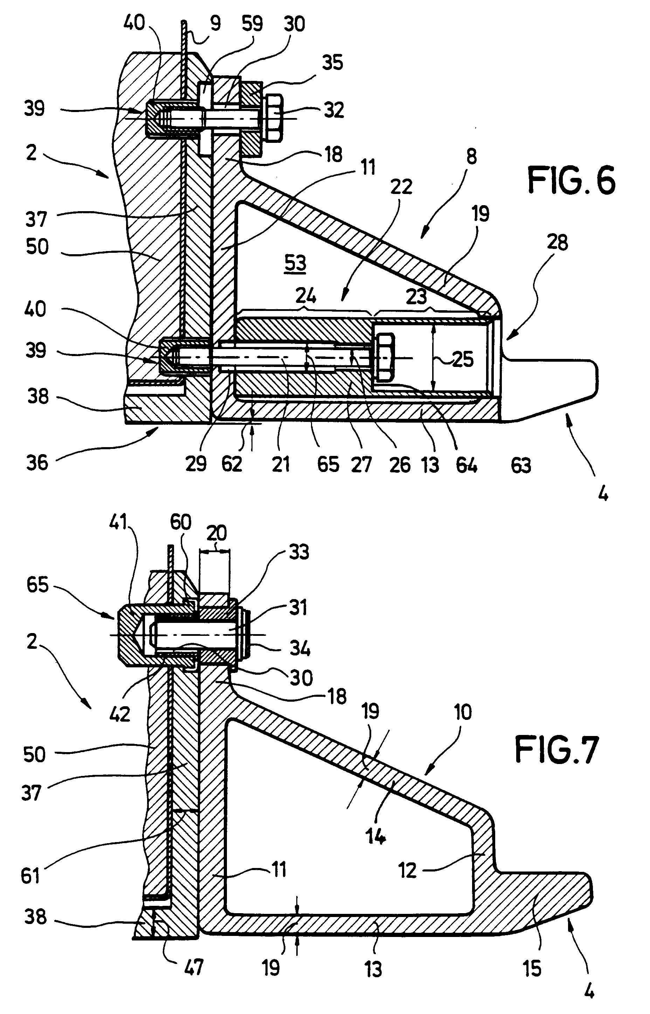

In Figur 6 ist ein Schnitt entlang der Linie VI-VI aus Figur 5 dargestellt.

Das Behältnis 2 ist ausschnittsweise durch Behältniswand 50 und auf dieser aufgebrachten, als Längsseite 9 ausgebildeten Abdeckung dargestellt. An der Längsseite 9 und von unten am Behältnis 2 anliegend ist ein Winkelprofil 36 zwischen Behältnis 2 und Verlastungsschiene 8 angeordnet. Das Winkelprofil umfaßt einen an der Längsseite 9 anliegenden Zwischenschenkel 37 und einen dazu rechtwinkelig verlaufenden, unterhalb des Behältnis 2 angeordneten Aufstandsschenkel 38.

Innenwand 11 und Anlageflansch 18 liegen am Zwischenschenkel 37 an, wobei sich dieser bis über den Anlageflansch 18 entlang der Längsseite 9 nach oben erstreckt. Die Bodenwand 13 verläuft im wesentlichen parallel zum Aufstandsschenkel 38 und ist gegenüber diesem um die Höhe 62 nach oben versetzt.

In dem trapezförmigen Hohlraum 53 der Verlastungsschiene 8 ist benachbart zur Bodenwand 13 und parallel zu dieser der Aufnahmezylinder 22 angeordnet. Dieser erstreckt sich zwischen der Innenwand 11 und einer in einer Zahnlücke des Seitenprofils 4 ausgebildeten Öffnung 28.

Der Durchmesser der Öffnung 28 entspricht in etwa der Höhe der Außenwand 12, siehe Figur 7. Während der Aufnahmezylinder 22 im Hohlraum 53 an der Innenwand 11 anliegt, ist er in der Öffnung 28 versenkt angeordnet. Benachbart zu dieser Öffnung weist der Aufnahmezylinder 22 einen ersten Abschnitt 23 auf, der im wesentlichen als Hohlzylinder ausgebildet ist und einen Innendurchmesser 25 aufweist, der nur etwas kleiner als der Durchmesser der Öffnung 28 ist. Das der Öffnung 28 zugewandte Ende des ersten Abschnitts 23 weist einen radial abstehenden Randflansch 63 auf, der an der konisch verlaufenden Innenfläche der Öffnung 28 anliegt. Der erste Abschnitt 23 erstreckt sich in etwa über die halbe Länge des Aufnahmezylinders 22. An diesen schließt sich ein zweiter Abschnitt 24 an, der einen gegenüber dem Innendurchmesser 25 des ersten Abschnitts 23 verkleinerten Innendurchmesser 26 aufweist. Durch die Innendurchmesserverkleinerung zwischen erstem Abschnitt 23 und zweitem Abschnitt 24 ist innerhalb des Aufnahmezylinders 22 eine Anschlagfläche 64 für einen Kopf einer Schraube 21 gebildet. Diese ist bis zur Anlage ihres Schraubkopfes mit dem Anschlag 64 in den zweiten Abschnitt 24 einschraubbar. Der Innendurchmesser 26 ist zur Führung der Schraube 21 etwas größer als deren Durchmesser. Während sich die Bohrung des zweiten Abschnitts 24 mit Innendurchmesser 26 über etwa ein Drittel der Längsausdehnung des zweiten Abschnitts erstreckt, ist die Bohrung entlang der weiteren Längsausdehnung mit einem im Vergleich zum Innendurchmesser 26 vergrößerten Innendurchmesser 65 versehen. Dieser setzt sich bis zu einer Öffnung 29 der Innenwand 11 mit gleichem Durchmesser fort. Auf der am Zwischenschenkel 37 zugewandten Seite der Innenwand 11 ist die Öffnung 29 konisch erweitert. Konzentrisch zur Öffnung 29 ist im Zwischenschenkel 37 eine Aufnahmebohrung 39 angeordnet, die sich bis in die Behältniswand 50 fortsetzt. In der Aufnahmebohrung 39 ist eine Einschraubhülse 40 fixiert. In diese ist die Schraube 21 mit ihrem dem Schraubenkopf gegenüberliegenden Schraubenende eingeschraubt.

Der erste Abschnitt 23 des Aufnahmezylinders 22 dient zur versenkten Anordnung der Schraube 21, während der zweite Abschnitt 24 zur Führung und als Einschraubanlage für die Schraube 21 dient.

Im Anlageflansch 18 ist in etwa mittig zu dessen Länge eine Bohrung 30 ausgebildet. Konzentrisch zu dieser ist im Zwischenschenkel 37 eine Aufnahmebohrung 39 ausgebildet, die sich durch Längsseite 9 bis in die ehältniswand 50 fortsetzt. Auf der der Innenwand 11 zugewandten Seite des Zwischenschenkel 37 ist die Aufnahmebohrung 39 von einer konzentrischen Aufnahmevertiefung 59 umgeben. In der Aufnahmebohrung 39 ist entsprechend zur obenstehend beschriebenen Aufnahmebohrung für die Schraube 31 eine

Einschraubhülse 40 fixiert. Diese füllt die Aufnahmebohrung 39 und ist fluchtend zur Aufnahmevertiefung 59 angeordnet. In Bohrung 30 und Aufnahmebohrung 39 ist die Fixierschraube 32 eingeschraubt. Zwischen ihrem Schraubenkopf und dem Anlageflansch 18 ist die Anlageleiste 35 angeordnet. Diese weist zur Aufnahme der Schraube 32 eine konzentrisch zur Bohrung 30 angeordnete Öffnung auf.

In Figur 7 ist ein Schnitt entlang der Linie VII-VII aus Figur 5 dargestellt. Die Wandstärken 19 von Innenwand 11, Außenwand 12, Bodenwand 13 und Deckwand 14 sind im wesentlichen gleich. Die Wandstärke 20 des Anlageflansch 18 ist dicker als die Wandstärke 19 des Hohlprofils 10. Der Aufstandsschenkel 38 weist eine der Wandstärke 20 des Anlageflansch 18 in etwa entsprechende Dicke 47 auf, während der Zwischenschenkel 37 eine der Wandstärke 19 von beispielsweise der Innenwand 11 entsprechende Dicke 61 aufweist.

Im Anlageflansch 18 ist ein Positionierbolzen 31 eingesteckt. Dieser ist in eine in einer Bohrung 30 des Anlageflansch 18 angeordneten Führungsbuchse 33 angeordnet. Der Außendurchmesser der Führungsbuchse 33 entspricht im wesentlichen dem Innendurchmesser der Bohrung 30, während der Innendurchmesser der Führungsbuchse 33 dem Außendurchmesser des Positionierbolzens 31 entspricht. Die Führungsbuchse 33 durchsetzt den Anlageflansch 18 in seiner gesamten Wandstärke 20 und weist zur Anlage am Anlageflansch 18 auf der dem Zwischenschenkel 37 gegenüberliegenden Seite einen radialen Anlageflansch auf. Mit diesem ist ein Positionierbolzenkopf in Anlage. Zum Halten des Positionierbolzens 31 in Führungsbuchse 33 ist der Haltebügel 34 an den Positionierbolzenkopf angelegt und gemäß Figur 4 oder 5 durch zwei seitlich zum Positionierbolzen 31 angeordnete Schrauben am Anlageflansch 18 befestigt. Konzentrisch zur Bohrung 30 ist eine Aufnahmebohrung 65 im Zwischenschenkel 37 angeordnet, die sich in die Behältniswand 50 erstreckt. In dieser Bohrung ist eine Positionierhülse 41 angeordnet, die einseitig geschlossen ist und durch einen Radialflansch 60 in einer konzentrisch zur Aufnahmebohrung 65 im Zwischenschenkel 37 ausgebildeten Aufnahmevertiefung festgelegt ist. In die Positionierhülse 41 ist der Positionierbolzen 31 in etwa mit der Hälfte seiner Länge eingeführt. Der Innendurchmesser der Positionierhülse 41 ist größer als der Außendurchmesser des Positionierbolzen 31. Zwischen Positionierbolzen 31 und Positionierhülse 41 ist eine Gleitbuchse 42 angeordnet, deren Wandstärke in etwa dem Unterschied zwischen Innendurchmesser der Positionierhülse und Außendurchmesser des Positionbolzen entspricht. Die Gleitbuchse 42 erstreckt sich im wesentlichen vom offenen Ende der Führungsbuchse 33 bis zum Ende des Positionierbolzens 31. Die Gleitbuchse 42 weist einen der Führungsbuchse 33 benachbarten Radialflansch auf, der auf dem Radialflansch 60 der Positionierhülse 41 aufliegt. Die im Zwischenschenkel 37 konzentrisch zur Aufnahmebohrung 65 ausgebildete Aufnahmevertiefung weist eine Tiefe auf, die der Dicke der Radialflansche von Positionierhülse und Gleitbuchse im wesentlichen entspricht, so daß der Radialflansch der Gleitbuchse 42 fluchtend zum Zwischenschenkel 37 und in Anlage mit Anlageflansch 18 beziehungsweise Führungsbuchse 33 angeordnet ist. Bei einigen Positionierbolzen 31 einer Verlastungsschiene 8 ist die Gleitbuchse 42 zum Einsetzen des Positionierbolzens 31 mit Spiel in die Positionierhülse 41 weggelassen.

## Patentansprüche

1. Verriegelungsvorrichtung (1) für ein Behältnis (2) mit eine Aufstandsfläche (3) des Behältnisses (2) umgebenden Längs- (9) und Querseiten, wie Container, Shelter oder dergleichen, mit einer hohlprofilartigen zumindest an den Längsseiten (9) seitlich am Behältnis (2) angeordneten Verlastungsschiene (8) von deren Außenwand ein die Aufstandsfläche (3) des Behältnis (2) zumindest teilweise umrandendes Seitenprofil (4) absteht, welches zum Verriegeln der Verriegelungsvorrichtung (1) auf einer Ladefläche (5), insbesondere eines Fluggerätes (6) Verriegelungseingriffe (7) aufweist, und mit einem mit der Verlastungsschiene (8) verbundenden Anlageflansch (18), über den die Verriegelungsvorrichtung (1) mit dem Behältnis (2) lösbar verbunden ist,
**dadurch gekennzeichnet,**
daß zur Aufnahme von Mitteln (21) zum lösbaren Befestigen der Verriegelungsvorrichtung (1) an dem Behältnis (2) in dem Hohlprofil (10) der Verlastungsschiene (8) ein zum Seitenprofil (4) offener Aufnahmezylinder (22) angeordnet ist, der sich im wesentlichen senkrecht zu den Seitenwänden (11, 12) des Hohlprofils (10) erstreckt.

2. Verriegelungsvorrichtung nach Anspruch 1,
**dadurch gekennzeichnet,**
daß der Aufnahmezylinder (22) zwei Abschnitte (23, 24) mit unterschiedlichem Innendurchmesser (25, 26) aufweist, wobei der Abschnitt (23) mit größerem Innendurchmesser (25) als Versenköffnung und der Abschnitt (24) mit kleinerem Innendurchmesser (26) mit einem Schraubenanschlag (27) ausgebildet ist.

3. Verriegelungsvorrichtung nach wenigstens einem der vorangehenden Ansprüche,
**dadurch gekennzeichnet,**
daß der Aufnahmezylinder (22) zwischen zwei gegenüberliegenden Öffnungen (28, 29) der Seitenwände (11, 12) im Hohlprofil (10) anordbar ist.

4. Verriegelungsvorrichtung nach wenigstens einem der vorangehenden Ansprüche,
**dadurch gekennzeichnet,**
daß die Verlastungsschiene (8) mit einer Anzahl von Schrauben (21, 32) am Behältnis (2) lösbar befestigt ist.

5. Verriegelungsvorrichtung nach wenigstens einem der vorhergehenden Ansprüche,
**dadurch gekennzeichnet,**
daß der Anlageflansch (18) mit einer im Vergleich zum Hohlprofil (10) größeren Wandstärke (20) ausgebildet ist.

6. Verriegelungsvorrichtung nach wenigstens einem der vorangehenden Ansprüche,
**dadurch gekennzeichnet,**
daß im Anlageflansch (18) eine Anzahl von Bohrungen (30) zur Aufnahme von Positionierbolzen (31) und/oder Fixierschrauben (32) ausgebildet sind.

7. Verriegelungsvorrichtung nach Anspruch 6,
**dadurch gekennzeichnet,**
daß der Positionierbolzen (31) in einer in der Bohrung (30) eingesteckten Führungsbuchse (33) geführt ist.

8. Verriegelungsvorrichtung nach Anspruch 7,
**dadurch gekennzeichnet,**
daß zum Halten von Positionierbolzen (31) und Führungsbuchse (33) in der Bohrung (30) ein Haltebügel (34) mit dem Anlageflansch (18) verschraubbar ist.

9. Verriegelungsvorrichtung nach wenigstens einem der Ansprüche 6-8,
**dadurch gekennzeichnet,**
daß zwischen Bohrung (30) und Fixierschraube (32) eine Anlageleiste (35) angeordnet ist.

10. Verriegelungsvorrichtung nach Anspruch 9,
**dadurch gekennzeichnet,**
daß die Anlageleiste (35) am Anlageflansch (18) anschraubbar ist.

11. Verriegelungsvorrichtung nach wenigstens einem der vorhergehenden Ansprüche,
**dadurch gekennzeichnet,**
daß das Hohlprofil (10) der Verlastungsschiene (8) mit einer Innenwand (11) am Behältnis (2) anliegt und von dessen gegenüberliegender Außenwand (12) das Seitenprofil (4) absteht.

12. Verriegelungsvorrichtung nach wenigstens einem der vorhergehenden Ansprüche,
**dadurch gekennzeichnet,**
daß Hohlprofil (10) und Seitenprofil (4) einstückig ausgebildet sind.

13. Verriegelungsvorrichtung nach wenigstens einem der vorangehenden Ansprüche,
**dadurch gekennzeichnet,**
daß das Hohlprofil (10) einen trapezförmigen Querschnitt aufweist, wobei Innen- und Außenwand (11, 12) im wesentlichen parallel sind, eine Bodenwand (13) parallel zur Aufstandsfläche (3) des Behältnis (2) ist und eine Deckwand (14) in Richtung zum Seitenprofil (4) nach unten geneigt verläuft.

14. Verriegelungsvorrichtung nach wenigstens einem der vorangehenden Ansprüche,
**dadurch gekennzeichnet,**
daß das Seitenprofil (4) zahnartig vom Hohlprofil (10) absteht und zum Eingreifen einer auf der Ladefläche (5) des Fluggeräts (6) angeordneten Verriegelungseinrichtung (17) Zahnlücken aufweist.

15. Verriegelungsvorrichtung nach wenigstens einem der Ansprüche 11-14,
**dadurch gekennzeichnet,**
daß zwischen Innenwand (11) und Behältnis (2) ein Winkelprofil (36) angeordnet ist, wobei ein Zwischenschenkel (37) des Winkelprofils parallel zur Innenwand (11) verläuft und ein Aufstandsschenkel (38) von unten an der Aufstandsfläche (3) des Behältnis (2) anliegt.

16. Verriegelungsvorrichtung nach Anspruch 15,
**dadurch gekennzeichnet,**
daß für die Schrauben (21) und/oder Fixierschrauben (32) und/oder Positionierbolzen (31) Aufnahmebohrungen (39) im Zwischenschenkel (37) und einer Behältniswand (50) angeordnet sind.

17. Verriegelungsvorrichtung nach Anspruch 16,
**dadurch gekennzeichnet,**
daß in der Aufnahmebohrung (39) Einschraubhülsen (40) oder Positionierhülsen (41) befestigt sind.

18. Verriegelungsvorrichtung nach Anspruch 17,
**dadurch gekennzeichnet,**
daß zumindest in einigen Positionierhülsen (41) Gleitbuchsen (42) angeordnet sind.

19. Verriegelungsvorrichtung nach wenigstens einem der vorangehenden Ansprüche,
**dadurch gekennzeichnet,**
daß zumindest an einem Ende (43, 44) der Verlastungsschiene (8) eine Abstandsrolle (45) um eine vertikale Drehachse (46) drehbar gelagert ist.

20. Verriegelungsvorrichtung nach wenigstens einem der Ansprüche 15-19,
**dadurch gekennzeichnet,**
daß der Aufstandsschenkel (38) mit dickerer Wandstärke (38) als die Bodenwand (13) des Hohlprofils (10) ausgebildet ist.

21. Verriegelungsvorrichtung nach wenigstens einem der Ansprüche 15-20,
**dadurch gekennzeichnet,**
daß die Bodenwand (13) relativ zur Aufstandsfläche (3) gegenüber dem Aufstandsschenkel (38) nach oben versetzt ist.

22. Verriegelungsvorrichtung nach wenigstens einem der Ansprüche 15-21,
**dadurch gekennzeichnet,**
daß das Winkelprofil (36) sich zwischen zwei an Ecken (48) des Behältnis (2) angeordneten Verladeecken (49) erstreckt und mit diesen fluchtend ausgebildet ist.

## Claims

1. Locking device (1) for a receptacle (2) such as a container, shelter or the like which has longitudinal sides (9) and transverse sides surrounding a standing surface (3) of the receptacle (2), comprising a hollow section-like loading rail (8), which is disposed laterally against the receptacle (2) at least along the longitudinal sides (9) and projecting from the outer wall of which is a lateral section (4), which at least partially borders the standing surface (3) of the receptacle (2) and has locking catches (7) for locking the locking device (1) on a loading surface (5), in particular of an aircraft (6), and comprising a contact flange (18) which is connected to the loading rail (8) and by means of which the locking device (1) is detachably connected to the receptacle (2),
**characterized in that**
for accommodating means (21) of detachably fastening the locking device (1) to the receptacle (2), there is disposed in the hollow section (10) of the loading rail (8) a receiving cylinder (22), which is open towards the lateral profile (4) and extends substantially at right angles to the side walls (11, 12) of the hollow section (10).

2. Locking device according to claim 1,
**characterized in that**
the receiving cylinder (22) comprises two portions (23, 24) of differing inside diameter (25, 26), the portion (23) with the larger inside diameter (25) taking the form of a countersunk opening and the portion (24) with the smaller inside diameter (26) being constructed with a screw stop (27).

3. Locking device according to at least one of the preceding claims,
**characterized in that**
the receiving cylinder (22) may be disposed in the hollow section (10) between two opposing openings (28, 29) of the side walls (11, 12).

4. Locking device according to at least one of the preceding claims,
**characterized in that**
the loading rail (8) is detachably fastened to the receptacle (2) by a number of screws (21, 32).

5. Locking device according to at least one of the preceding claims,
**characterized in that**
the contact flange (18) is constructed with a greater wall thickness (20) than the hollow section (10).

6. Locking device according to at least one of the preceding claims,
**characterized in that**
a number of bores (30) for receiving positioning bolts (31) and/or fixing screws (32) are formed in the contact flange (18).

7. Locking device according to claim 6,
**characterized in that**
the positioning bolt (31) is guided in a guide bush (33) inserted in the bore (30).

8. Locking device according to claim 7,
**characterized in that**
for holding the positioning bolt (31) and the guide bush (33) in the bore (30), a fixing bracket (34) may be screwed to the contact flange (18).

9. Locking device according to at least one of claims 6 to 8,
**characterized in that**
a contact strip (35) is disposed between the bore (30) and the fixing screw (32).

10. Locking device according to claim 9,
**characterized in that**
the contact strip (35) may be fastened by screws to the contact flange (18).

11. Locking device according to at least one of the preceding claims,
**characterized in that**
the hollow section (10) of the loading rail (8) rests with an inner wall (11) against the receptacle (2) and the lateral section (4) projects from the opposite, outer wall (12) of the hollow section.

12. Locking device according to at least one of the preceding claims,
**characterized in that**
the hollow section (10) and the lateral section (4) are constructed as a single piece.

13. Locking device according to at least one of the preceding claims,
**characterized in that**
the hollow section (10) has a trapezoidal cross section, the inner and outer walls (11, 12) being substantially parallel, a bottom wall (13) extending parallel to the standing surface (3) of the receptacle (2) and a top wall (14) sloping down towards the lateral section (4).

14. Locking device according to at least one of the preceding claims,
**characterized in that**
the lateral section (4) projects in a tooth-like manner from the hollow section (10) and has tooth gaps for the engagement of a locking device (17) disposed on the loading surface (5) of the aircraft (6).

15. Locking device according to at least one of claims 11 to 14,
**characterized in that**
an angle section (36) is disposed between the inner wall (11) and the receptacle (2), an intermediate limb (37) of the angle section extending parallel to the inner wall (11) and a standing limb (38) resting from below against the standing surface (3) of the receptacle (2).

16. Locking device according to claim 15,
**characterized in that**
location bores (39) for the screws (21) and/or fixing screws (32) and/or positioning bolts (31) are disposed in the intermediate limb (37) and in a receptacle wall (50).

17. Locking device according to claim 16,
**characterized in that**
screw-in sleeves (40) or positioning sleeves (41) are fastened in the location hole (39).

18. Locking device according to claim 17,
**characterized in that**
slide bushes (42) are disposed at least in some positioning sleeves (41).

19. Locking device according to at least one of the preceding claims,
**characterized in that**
a distance roller (45) is supported at least on one end (43, 44) of the loading rail (8) so as to be rotatable about a vertical axis of rotation (46).

20. Locking device according to at least one of claims 15 to 19,
**characterized in that**
the standing limb (38) is constructed with a greater wall thickness (38) than the bottom wall (13) of the hollow section (10).

21. Locking device according to at least one of claims 15 to 20,
**characterized in that**
the bottom wall (13) relative to the standing surface (3) is offset in an upward direction relative to the standing limb (38).

22. Locking device according to at least one of claims 15 to 21,
**characterized in that**
the angle section (36) extends between, and is constructed flush with two loading corners (49) disposed at corners (48) of the receptacle (2).

## Revendications

1. Dispositif de verrouillage (1) pour un récipient (2) comportant des faces longitudinales (9) et transversales, entourant une surface de pose (3) du récipient (2), tel qu'un conteneur, un abri ou analogue, avec une glissière de chargement sur plate-forme (8) en forme de profilé creux, disposée au moins sur les faces longitudinales (9), latéralement sur le récipient (2), glissière de la paroi extérieure de laquelle fait saillie un profilé latéral (4) entourant au moins partiellement la face de pose (3) du récipient (2) et présentant des creusements de verrouillage (7) pour permettre le verrouillage du dispositif de verrouillage (1) sur une surface de chargement (5), en particulier d'un engin volant (6) et comportant un rebord d'appui (18), relié à la glissière de chargement sur plate-forme (8), rebord par l'intermédiaire duquel le dispositif de verrouillage (1) est relié de façon désolidarisable au récipient (2),
caractérisé en ce que,
pour supporter des moyens (21) destinés à assurer une fixation désolidarisable du dispositif de verrouillage (1) sur le récipient (2) est disposé dans le profilé creux (10) de la glissière de chargement sur plate-forme (8) un cylindre de réception (22), ouvert en direction du profilé latéral (4) et s'étendant sensiblement perpendiculairement aux parois latérales (11, 12) du profilé creux (10).

2. Dispositif de verrouillage selon la revendication 1,
caractérisé en ce que
le cylindre de réception (22) présente deux sections (23, 24) ayant des diamètres intérieurs (25, 26) différents, la section (23) ayant le grand diamètre intérieur (25) étant réalisée sous forme d'ouverture noyée et la section (24) ayant le petit diamètre intérieur (26) étant réalisée avec une butée à vis (27).

3. Dispositif de verrouillage selon au moins l'une des revendications précédentes,
caractérisé en ce que
le cylindre de réception (22) est susceptible d'être disposé entre deux ouvertures (28, 29) opposées des parois latérales (11, 12) ménagées dans le profilé creux (10).

4. Dispositif de verrouillage selon au moins l'une des revendications précédentes,
caractérisé en ce que
la glissière de chargement sur plate-forme (8) est fixée de façon démontable sur le récipient (2) à l'aide d'une pluralité de vis (21, 32).

5. Dispositif de verrouillage selon au moins l'une des revendications précédentes,
caractérisé en ce que
le rebord d'appui (18) est réalisé avec une épaisseur de paroi (20) grande en comparaison de celle du profilé creux (10).

6. Dispositif de verrouillage selon au moins l'une des revendications précédentes,
caractérisé en ce qu'
une pluralité de perçages (30), destinés à recevoir des boulons de positionnement (31) et/ou des vis de fixation (32), sont réalisés dans le rebord d'appui (18).

7. Dispositif de verrouillage selon la revendication 6,
caractérisé en ce que
le boulon de positionnement (31) est guidé dans une douille de guidage (33) enfichée dans le perçage (30).

8. Dispositif de verrouillage selon la revendication 7,
caractérisé en ce qu'
un étrier de maintien (34) est susceptible d'être vissé au rebord d'appui (18) pour assurer le maintien des boulons de positionnement (31) et de la douille de guidage (33) dans le perçage (30).

9. Dispositif de verrouillage selon au moins l'une des revendications 6 à 8,
caractérisé en ce qu'
une bande d'appui (35) est disposée entre le perçage (30) et la vis de fixation (32).

10. Dispositif de verrouillage selon au moins la revendication 9,
caractérisé en ce que
la bande d'appui (35) peut être monté par vissage sur le rebord d'appui (18).

11. Dispositif de verrouillage selon au moins l'une des revendications précédentes,
caractérisé en ce que
le profilé creux (10) de la glissière de chargement sur plate-forme (8) appuie par une paroi intérieure (11) sur le récipient (2) et le profilé latéral (4) fait saillie de sa paroi extérieure (12) opposée.

12. Dispositif de verrouillage selon au moins l'une des revendications précédentes,
caractérisé en ce que
le profilé creux (10) et le profilé latéral (4) sont réalisés d'un seul tenant.

13. Dispositif de verrouillage selon au moins l'une des revendications précédentes,
caractérisé en ce que
le profilé creux (10) a une section transversale trapézoïdale, les parois intérieure et extérieure (11, 12) étant sensiblement parallèles, une paroi de fond (13) courant parallèlement à la surface de pose (3) du récipient (2) et une paroi de plafond (14) courant, inclinée vers le bas, dans la direction du profilé latéral (4).

14. Dispositif de verrouillage selon au moins l'une des revendications précédentes,
caractérisé en ce que
le profilé latéral (4) fait saillie à la façon d'une dent, vis-à-vis du profilé creux (10) et présente des entre-dents destinées à l'engagement d'un dispositif de verrouillage (17) disposé sur la surface de chargement (5) de l'engin volant (6).

15. Dispositif de verrouillage selon au moins l'une des revendications 11 à 14,
caractérisé en ce que,
entre la paroi intérieure (11) et le récipient (2), est disposé un profilé en cornière (36), une aile intermédiaire (37) du profilé en cornière courant parallèlement à la paroi intérieure (11) et une aile de pose (38) s'appuyant depuis le bas sur la surface de pose (3) du récipient (2).

16. Dispositif de verrouillage selon au moins la revendication 15,
caractérisé en ce que
des perçages de réception (39) sont ménagés dans l'aile intermédiaire (37) et une paroi de récipient (50), pour les vis (21) et/ou les vis de fixation (32) et/ou les boulons de positionnement (31).

17. Dispositif de verrouillage selon au moins la revendication 16,
caractérisé en ce que
des douilles de vissage (40) ou des douilles de positionnement (41) sont fixées dans le perçage de réception (39).

18. Dispositif de verrouillage selon au moins la revendication 17,
caractérisé en ce que
des douilles de glissement (42) sont disposées au moins dans quelques douilles de positionnement (41).

19. Dispositif de verrouillage selon au moins l'une des revendications précédentes,
caractérisé en ce qu'
un rouleau d'espacement (45) est monté tournant autour d'un axe de rotation (46) vertical au moins à une extrémité (43, 44) de la glissière de chargement sur le plate-forme (8).

20. Dispositif de verrouillage selon au moins l'une des revendications 15 à 19,
caractérisé en ce que
l'aile de pose (38) a une épaisseur de paroi (38) supérieure à celle de la paroi de fond (13) du profilé creux (10).

21. Dispositif de verrouillage selon au moins l'une des revendications 15 à 20,
caractérisé en ce que
la paroi de fond (13) est décalée vers le haut par rapport à la surface de pose (3), vis-à-vis de l'aile de pose (38).

22. Dispositif de verrouillage selon au moins l'une des revendications 15 à 21,
caractérisé en ce que
le profilé en cornière (36) s'étend entre deux angles de chargement (49) disposés aux coins (48) du récipient (2) et est aligné avec ces angles (49).
